# EUROPÄISCHE PATENTSCHRIFT

(11) **EP 0 631 890 B1**
(45) Veröffentlichungstag und Bekanntmachung des Hinweises auf die Patenterteilung: **08.04.1998**
(21) Anmeldenummer: 94110306.1
(22) Anmeldetag: 02.07.1994
(51) Int. Cl.: B60D 5/00, B62D 47/02

(54) **Faltenbalg für den Einbau zwischen zwei gelenkig miteinander verbundene Fahrzeuge**
Concertina wall to be mounted between articulated road vehicles
Soufflet d'intercirculation à être installé entre véhicules routiers articulés

(30) Priorität: 02.07.1993 DE 4322098; 03.12.1993 DE 4341231
(43) Veröffentlichungstag der Anmeldung: 04.01.1995
(73) Patentinhaber: HÜBNER Gummi- und Kunststoff GmbH, D-34123 Kassel (DE)
(72) Erfinder: Koch, Robert, D-37242 Bad Sooden-Allendorf (DE); Mosaner, Knud, D-34127 Kassel (DE)
(74) Vertreter: Walter, Helmut, Dipl.-Ing.

(56) Entgegenhaltungen:
- EP-A- 0 275 365
- EP-A- 0 544 203
- DE-A- 3 612 425
- US-A- 2 193 156

## Beschreibung

Die Erfindung betrifft einen Faltenbalg nach dem Oberbegriff des Anspruchs 1.

Übergangseinrichtungen zwischen gelenkig miteinander verbundenen Straßen- und Schienenfahrzeugen ermöglichen das überwechseln von Personen vom einen zum anderen Fahrzeug. Hierzu weist die Übergangseinrichtung eine Übergangsbrücke auf. Um dieses Überwechseln von Umgebungseinflüssen unbeeinträchtigt zu ermöglichen, weist die Übergangseinrichtung einen Übergangsschutz auf, der die Übergangsbrücke tunnelförmig oder röhrenförmig umschließt. Die Übergangseinrichtung ist mit ihren beiden Enden lösbar an die Fahrzeugstirnseiten angeschlossen, sie kann außerdem quergeteilt sein und beide Teile können ihrerseits lösbar miteinander verbunden sein.

Als Übergangsschutz kommen zieharmonikaförmige Faltenbälge zum Einsatz, die Relativbewegungen zwischen zwei gelenkig miteinander gekuppelten bzw. verbundenen Fahrzeugen möglichst wenig behindern sollen. Im allgemeinen werden einzelne Balgbahnen entlang ihren in Umfangsrichtung der Röhre bzw. des Tunnels verlaufenden Längskanten durch Klemmleisten (Rahmen) miteinander verbunden. Je nach Ausbildung und Anordnung sind die Balgbahnen zwischen zwei Klemmleisten eben und es entsteht die von Harmonikabälgen übernommene Zickzackform der Gesamtheit des Balges oder es bildet je eine Balgbahn zwischen zwei Klemmleisten eine Rinne mit im wesentlichen halbkreisförmigen Querschnitt; es liegt ein Wellenbalg vor, der jedoch in der Praxis auch als Faltenbalg angesehen wird.

Im allgemeinen haben Wellen bzw. Falten eines Faltenbalges auf dem gesamten Umfang und untereinander gleiche Kontur, wobei jedoch auch Maßnahmen bekannt sind, besonderen örtlichen Belangen Rechnung zu tragen. So ist beispielsweise die Anordnung von Zusatzfalten in den bogenförmigen Übergangsbereichen zwischen Balgseitenwänden einerseits sowie Balgdach und Balgboden andererseits bekannt, wenn der Balgquerschnitt durch zwei vertikale Seitenwände, ein horizontales Dach und einem horizontalen Boden definiert ist und die Übergangsbereiche der Seitenwände zum Dach und zum Boden ausgeprägte Übergangsbogen sind (EP-A-0 275 365).

Ein besonderer Problembereich bei solchen Faltenbälgen ist der Balgboden. Im allgemeinen setzen sich die unteren Übergangsböden in je einer Bodenhälfte fort und diese Bodenhälften sind im Bereich der Fahrzeuglängsmitte mit ihren Längskanten so weit einander angenähert, daß der Balg lösbar geschlossen und geöffnet werden kann. Diese Möglichkeit, den Balg auf diese Wiese öffnen und schließen zu können, ermöglicht es den offenen Balg beim Einbau von oben her über die Übergangsbrücke und vorzugsweise auch die Kuppeleinrichtung zwischen den Fahrzeugen zu stülpen und danach zu verschließen, so daß der Übergangsbereich auch an der Unterseite gegen Umwelteinflüsse geschützt ist. Diesen Umwelteinflüssen ist nun aber der Balgboden in besonderem Maße ausgesetzt. Von der Fahrbahn werden Feststoffpartikel, im Winter Eisbrocken von außen gegen den Balgboden geschleudert, innen sammelt sich auf dem Balgboden Wasser, das im Winter gefrieren kann und zum Verrotten des Balges im Bodenbereich beiträgt, wenn nicht ständig für eine gute Entwässerung gesorgt wird. In besonderem Maße stellt die Fahrbahn, insbesondere bei Straßengelenkfahrzeugen eine Gefahr für den Balgboden dar, indem er beispielsweise beim Überfahren von Bodenwellen auf der Fahrbahn aufschlägt, über die Fahrbahn schleift und abgerieben wird. Diese Gefahren treten nun durch moderne Fahrzeugentwicklungen in verstärktem Maße auf, bei denen der Fahrzeugboden einerseits immer tiefer gelegt wird und im Übergangsbereich zwischen zwei Fahrzeugen keine Stufe mehr gewünscht wird, der Fahrzeugboden auch im Übergangsbereich glatt und in geringer Höhe über der Fahrbahn durchgehen soll. Man versuchte das Problem dadurch zu lösen, daß man dem Balg im Bodenbereich eine geringere Faltenhöhe gibt, wodurch der Boden aber den ganzen Balg steifer macht, als es im Hinblick auf die Fahrzeugbewegungen zwischen den gekuppelten Fahrzeugen wünschenswert sein kann. Die Faltenhöhe im Bodenbereich muß deswegen ein Kompromiß bezüglich geringer Höhe über der Fahrbahn und Verformbarkeit sein. Das Problem des stärker als die Gesamtheit des Faltenbalges verschleißenden Faltenbalgbodens ist damit zwar gemildert, besteht aber im Grundsatz unverändert fort.

Es ist Aufgabe der vorliegenden Erfindung, dem Problem des verstärkten Verschleisses des Faltenbalges im Bereich des Faltenbalgbodens auf zweckmäßiger Weise Rechnung zu tragen, dabei aber auch die Möglichkeit zu schaffen, einen möglichst flachen Boden in möglichst geringer Höhe über der Fahrbahn anordnen zu können.

Die Lösung der Aufgabe ergibt sich aus den Patentansprüchen, indem ein Faltenbalg gemäß dem Gattungsbegriff des Anspruchs 1 gemäß dem Kennzeichen des Anspruchs 1 ausgebildet wird und ein solcher Faltenbalg gemäß den Unteransprüchen weiter ausgebildet wird.

Demzufolge wird dem Verschleiß des Faltenbalges im Bereich des Faltenbalgbodens generell dadurch Rechnung getragen, daß der Boden nicht mehr wie bisher die Fortsetzung des Balges in seiner Gesamtheit zwischen den unteren Enden der Balgseitenwände, sondern eine eigene, selbständig ein- und ausbaubare Baugruppe ist, die dem übrigen Balg mit in üblicher Weise zwei Seitenwänden und einem Dach lösbar zugeordnet ist. Ein gewisser Verschleiß des Balgbodens kann demzufolge in Kauf genommen und der Balgboden auf eine relativ kurze Lebensdauer hin ausgelegt werden, weil es bei einem Verschleiß des Balgbodens, während der Balg im wesentlichen mit Dach und Seitenwänden noch voll einsetzbar ist, mit relativ geringem Aufwand möglich ist, den verschlissenen Boden durch einen neuen Boden zu ersetzen, während der Balg mit Seitenwänden und Dach u.U. sogar an Ort und Stelle eingebaut bleiben kann. Die Erfindung erschöpft sich nun nicht in dieser eher generellen Lehre, sondern zeigt Mittel auf, wie der Grundgedanke der Erfindung, also den Balgboden austauschbar zu machen, in besonders zweckmäßiger Weise realisiert werden kann. Mehrere Maßnahmen dienen dazu, den Balgboden nicht nur in besonders zweckmäßiger Weise austauschbar zu machen, sondern eine sehr flache Bauweise des Bodens zu ermöglichen. Diesem Ziel dienen insbesondere zwei Balgbodenvarianten. Bei der einen ist den zickzackförmig gewellten Balgseitenwänden und dem ebenso gefalteten Balgdach ein Wellenboden zugeordnet.

Die Erfindung ist nachfolgend anhand der Zeichnung näher erläutert; in der Zeichnung zeigen in schematischer Darstellung:
- Fig. 1: einen als geschlossene Röhre mit zwei Seitenwänden, einem Dach, einem Boden sowie Übergangsbogen zwischen den Seitenwänden einerseits und dem Dach sowie dem Boden andererseits ausgebildeten Faltenbalg, wie er üblich ist und der Erfindung zugrundeliegt als Querschnitt;
- Fig. 2: eine Seitenansicht eines Gelenkfahrzeuges im Bereich der einander zugekehrten Stirnseiten der gelenkig miteinander verbundenen Teilfahrzeuge, zwischen denen ein Faltenbalg eingebaut ist;
- Fig. 3: in größerer Darstellung die Faltenkontur des Faltenbalges im Bereich des Daches, der Seitenwände und der Übergangsbogen, wie sie bei allen Ausführungsformen der Erfindung vorgesehen ist;
- Fig. 4: in größerer Darstellung die Falten- bzw. Wellenkontur des Faltenbalges im Bereich des Balgbodens, wie sie bei einer Ausführungsform der Erfindung vorgesehen ist;
- Fig. 5: einen Querschnitt durch einen erfindungsgemäß ausgebildeten Faltenbalg im unteren Balgbereich;
- Fig. 6: in perspektivischer Darstellung einen erfindungsgemäßen Balgboden;
- Fig. 7: als perspektivische Explosionsdarstellung einen erfindungsgemäßen Balg im unteren Bereich bzw. im Bereich des Übergangs zwischen einer Balgseitenwand und dem Balgboden;
- Fig. 8: als perspektivische Explosionsdarstellung einen erfindungsgemäßen Balg in einer anderen Ausbildung im Bereich zwischen einem unteren Balgübergangsbogen und dem Balgboden und
- Fig. 9: eine weitere erfindungsgemäße Balgausbildung.

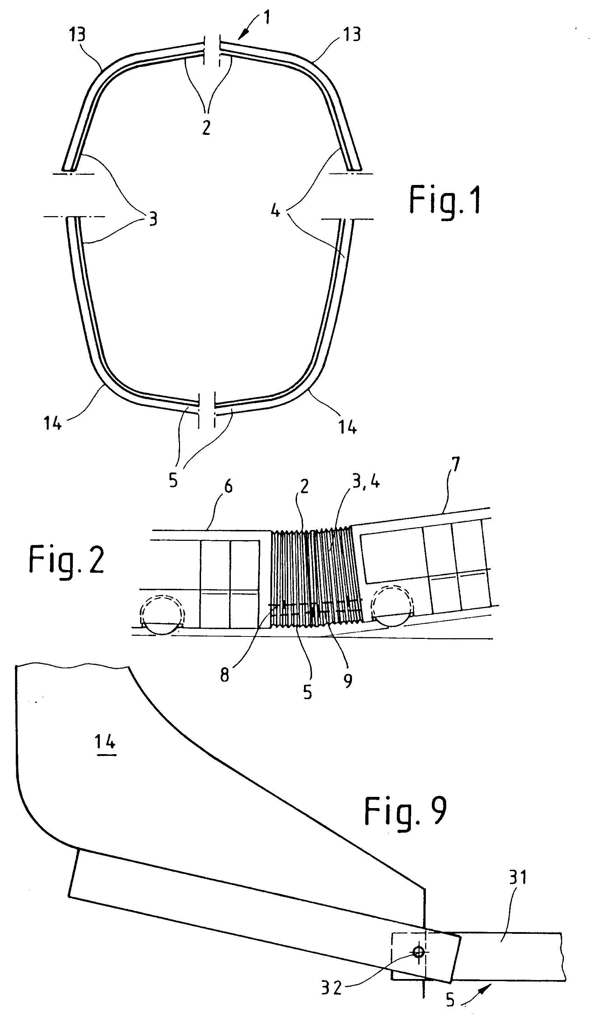

In üblicher Weise ist gemäß Fig. 1 ein Faltenbalg 1 mit dem Balgdach 2, zwei Balgseitenwänden 3 und 4 sowie dem Balgboden 5 zwischen zwei gelenkig miteinander verbundenen Fahrzeugen beziehungsweise Fahrzeugteilen 6,7 gemäß Fig. 2 angeordnet, dabei eine Übergangsbrückenkonstruktion 8 und die Kupplung 9 umschließend. Bei den beiden Fahrzeugteilen handelt es sich insbesondere um die beiden Glieder eines Gelenkomnibusses, dessen Innenräume der Fahrzeugglieder nur wenig im Querschnitt beeinträchtigt sich über einer Drehplattform fortsetzen, die auf einem Drehkranzgelenk abgestützt ist. Fußböden der beiden Fahrzeugglieder und der Drehplattform sind im Übergangsbereich, sowie möglichst bis zum vorderen und hinteren Fahrzeugende, ohne Stufe in geringer Höhe über der Fahrbahn angeordnet, es handelt sich also um einen sogenannten Niederflurgelenkomnibus, wobei Antrieb, Achsanordnung usw. erfindungsunabhängig sind bzw. der erfindungsgemäße Faltenbalg unabhängig von der Ausbildung des Gelenkomnibusses insoweit ist.

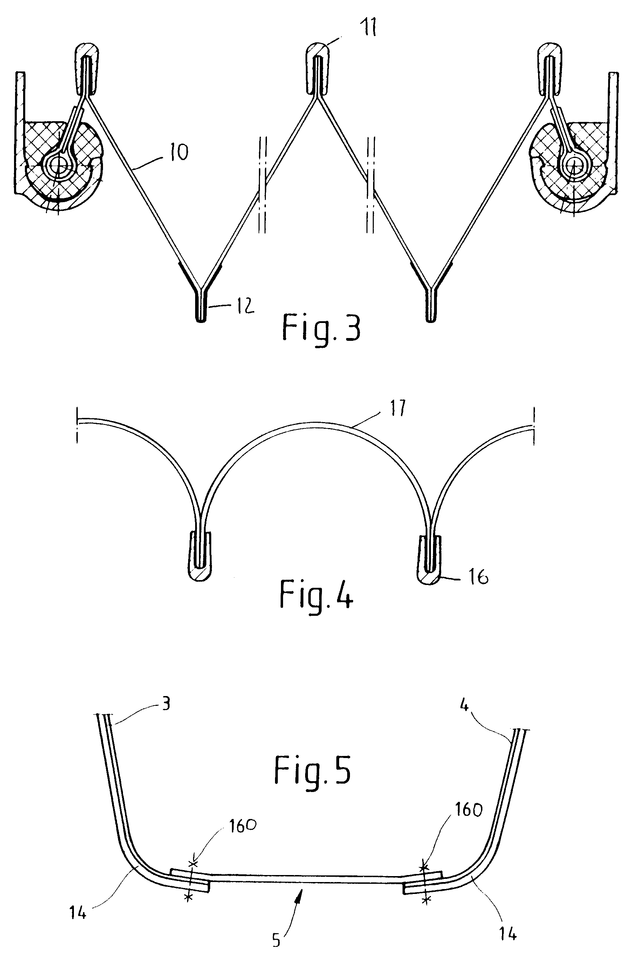

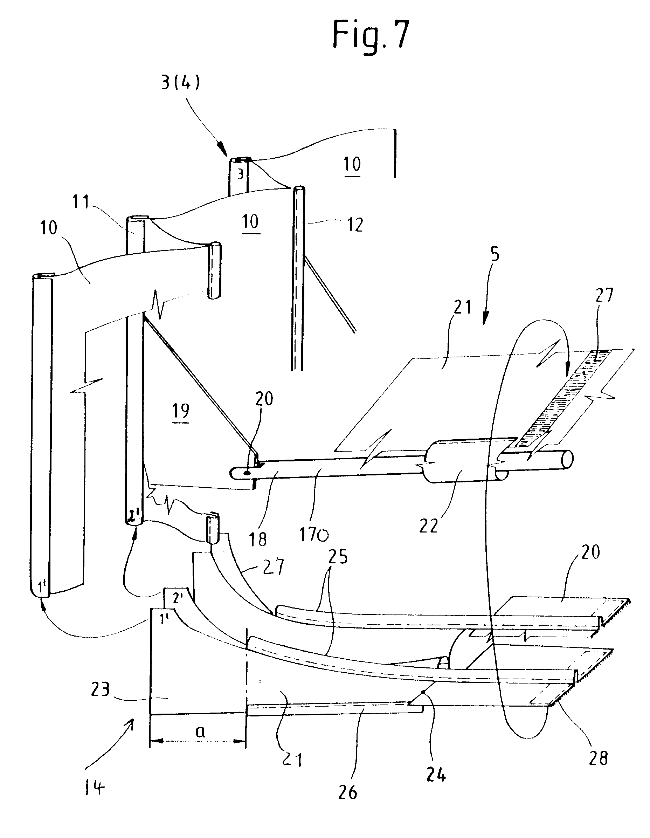

Der tunnelförmige Teil des Faltenbalges mit Faltenbalgdach 2 und Seitenwänden 3,4 erstreckt sich als Einheit vom unteren Ende der einen Seitenwand 3 bzw. 4 über dieses Seitenwand, einen Übergangsbogen zum Dach, das Dach, einen Übergangsbogen vom Dach zur anderen Seitenwand 4 bzw. 3 und diese andere Seitenwand bis zu deren unterem Ende (Fig. 1). In diesem Bereich sind die vom unteren Ende der einen Seitenwand bis zum unteren Ende der anderen Seitenwand durchgehend zickzackförmigen Falten aus Materialbahnen 10 gebildet, wobei jeweils zwei Materialbahnen, die aufeinanderfolgen durch eine einen Rahmen bildende erste äußere Klemmleiste 11 bzw. durch eine einen Rahmen bildende erste innere Klemmleiste 12 zusammengehalten sind, die die äußeren und inneren Balgkanten bilden. Ein Balgfaltenquerschnitt im Bereich der Seitenwände 3,4 und des Daches 2 des Faltenbalges ist in Fig. 3 dargestellt. In den oberen Übergangsbogen 13 und den unteren Übergangsbogen 14 kann zwischen je zwei Falten, die vom unteren Ende der einen Seitenwand bis zum unteren Ende der anderen Seitenwand verlaufen, auf den Bereich der Übergangsbogen beschränkt, jeweils eine zusätzliche Falte angeordnet sein, wie es an sich bekannt ist und dazu dient, die versteifende Wirkung der Übergangsbogen zu mindern und dazu beizutragen, daß über den Balgumfang eine nahezu gleiche Nachgiebigkeit herrscht mit dem bereits erwähnten Ziel, Relativbewegungen zwischen zwei miteinander gelenkig gekuppelten Fahrzeugen durch den Balg möglichst wenig zu behindern.

Ein bevorzugter Balgquerschnitt im Bereich des Balgbodens 5 ist in Fig. 4 dargestellt. Zwischen je zwei zweiten äußeren, als Kantprofilstäbe ausgebildeten Klemmleisten 16, in Fig. 3 mit 11 bezeichnet, ist eine Materialbahn 17, in Fig. 3 mit 10 bezeichnet, so angeordnet, daß ein rinnenförmiger, etwa halbkreisförmiger Querschnitt vorliegt, bei dem die Wölbung nach dem Inneren des Faltenbalges gerichtet ist, d.h. die Rinnen nach außen hin offen sind. Insoweit liegt ebenfalls eine bei Faltenbälgen bekannte Querschnittsform in der Form eines Wellenbalges vor, die deshalb nicht näher erläutert werden muß. Ein Balgboden 5 mit einer solchen Querschnittsform ist nun als dem übrigen, tunnelförmigen Balgteil 2-4, 13,14 als selbständig an- und ausbaubare Einheit zugeordnet, wie es rein schematisch in Fig. 5 dargestellt ist. Die unteren Übergangsbogen 14 sind noch Teil des tunnelförmigen Bauteils 2-4, 13,14, der Balgboden 5 ist zwischen den unteren Übergangsböden 14 eingesetzt und mit lösbaren Befestigungsmitteln 160 gehalten. Durch Überlappung von unteren Übergangsbögen 14 und Boden 5 ist angedeutet, daß die Verbindung so ausgebildet ist, daß auch in diesen Bereichen keine Umgebungseinflüsse in das Balginnere gelangen.

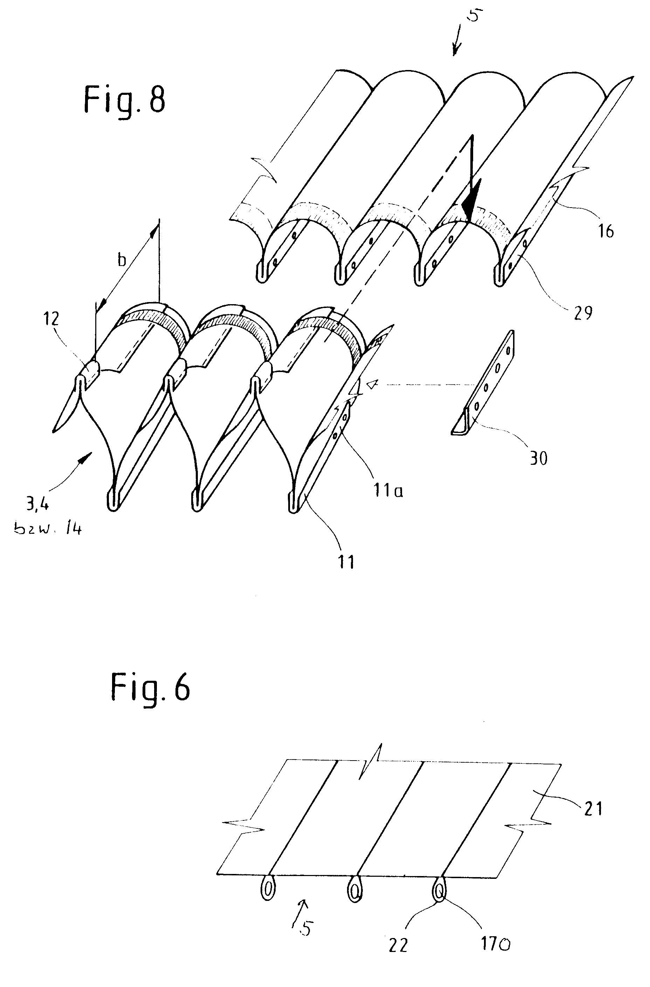

Im einzelnen besteht nun bei einer ersten erfindungsgemäßen Balgausbildung der Balgboden 5 aus einer Reihe von Stäben 170, die aus Metall, z.B. einer Aluminiumlegierung oder einem zweckentsprechenden Kunststoff bestehen können. Der Querschnitt dieser Stäbe 170 kann oval bzw. elliptisch sein, wie es in Fig. 6 dargestellt ist, wobei die längere Achse des Ovals bzw. der Ellipse vertikal steht, um die nötige Steifigkeit gegen Durchhängen gewährleisten zu können. Der Querschnitt der Stäbe 170 kann jedoch auch kreisrund sein oder die Stäbe 170 können geeignete Kantenprofile sein. Im Fall eines elliptischen oder kreisrunden Querschnitts handelt es sich vorzugsweise um Hohlprofile. Eine Mehrzahl dieser Stäbe 170 sind parallel zueinander angeordnet, wobei die Stäbe 170 in Balg- bzw. Fahrzeuglängsrichtung aufeinander folgen. Zum Anschluß dieser Stäbe 170 an den unteren Übergangsbogen können die Stäbe 170 an beiden Enden geschlitzt sein, Endabschnitte 18 gemäß Fig. 7 bilden und mit diesen geschlitzten Endabschnitten 18 auf je ein Konsol 19 aufgesteckt sein, das am unteren Ende je einem der ersten äußeren Klemmleisten 11 fest zugeordnet ist. Jeweilige Klemmleiste 11 und jeweiliges Konsol 19 können miteinander verschweißt, verklebt oder in einer anderen geeigneten Weise fest und dauerhaft miteinander verbunden sein. Dies lösbare Verbindung zwischen jeweiligem Stabende 18 und jeweiligem Konsol 19 kann durch je einen Splint 20 oder ein anderes geeignetes Befestigungsmittel erfolgen.

Im Fall, daß der Balgboden 5 allein von einer geeigneten Anzahl solcher Stäbe 170 gebildet wird, hat die Gesamtheit des Balges die notwendige Stabilität und, wenn die Verbindung zwischen den Stabenden 18 und den Konsolen 19 mittels der Splinte 20 in zweckgerichteter Weise erfolgt, ist die Nachgiebigkeit des Balges entsprechend den Anforderungen aus den Bewegungen der Fahrzeuge relativ zueinander nicht beeinträchtigt. Gegebenenfalls kann eine räumliche Beweglichkeit dadurch geschaffen werden, daß die Splinte 20 fest in den Konsolen 19 gehalten und die Stabenden 18 um die Längsachsen der Splinte 20 schwenkbar sind, während die Konsolen 19 so den ersten äußeren Klemmleisten 11 zugeordnet sind, daß sie um eine lotrechte Achse schwenkbar sind. Es muß die Wirkung einer steifen, starr angeschlossenen Platte vermieden sein.

Soll nun zusätzlich der Balgboden verhindern, daß auch im Bodenbereich Umwelteinflüsse in das Balginnere gelangen, so genügt die mit den Stäben 170 erzielbare Balgstabilität nicht. Die Stäbe 170 müssen dann als Armierung einem Balgboden zugeordnet werden, dessen Material dem in den Balgseitenwänden und dem Balgdach verwendeten Material entspricht, also insbesondere ein gummiertes Gewebe ist, wobei das Gewebe in üblicher Weise ein vorzugsweise textiles Gewebe ist und Gummi für jeden imprägnierenden natürlichen oder künstlichen Werkstoff steht.

Gemäß Fig. 6 handelt es sich bei einer einfachsten Lösung bei dem Boden um eine ebene Bahn aus einem flexiblen Faltenbalgstoff 21, auf dessen Unterseite Schlaufen 22 aufgenäht sind, durch die die Metallarmierung in der Form der Stäbe 170 geschoben ist.

Der Einbau eines solchen Bodens ergibt sich aus Fig. 7 und es ist ersichtlich, daß es sich trotz der Möglichkeit guter Abdichtung um einen Balgboden extrem geringer Dicke bzw. Höhe handelt.

Zwischen dem gemäß Fig. 6 aus einer Stoffbahn aus flexiblen Faltenbalgstoff 21 und Metallarmierungen in der Form der Stäbe 170 bestehenden Balgboden 5 und jeder der Seitenwände 3,4 ist ein unterer Übergangsbogen 14 als zunächst selbständiges Bauteil vorgesehen (Fig. 1,5,7). Im jeweiligen Übergangsbogen sind aus je zwei Materialbahnen 23 so viele bogenförmig verlaufende Falten gebildet, wie es der Faltenzahl in den Seitenwänden entspricht. Jede Materialbahn 23 weist einen Querschnitt 24 auf, der bis zu einem Klemmleisten abschnitt 25 reicht, in dem die jeweiligen beiden Materialbahnen 23 entlang ihren inneren Kanten zusammengehalten sind. Jeder dieser Klemmleisten abschnitte 25 beginnt am bodennahen Ende der Materialbahnen 23, verläuft über die Quereinschnitte 24 beider Materialbahnen hinaus und endet in einem Abstand a vor den seitenwandnahen Enden der Übergangsbogen 14 der der Faltentiefe in den Seitenwänden entspricht. Im unteren Bereich sind die beiden Materialbahnen 23 auf einer Länge durch eine entsprechende dritte Klemmleiste 26 zusammengehalten, die zwischen dem bodennahen Ende des Abstandes a beginnt und an den Quereinschnitten 24 endet. Die Materialbahnen 23 bilden insofern Übergangsbogen als ihre oberen Kanten 27 an den Quereinschnitten 24 etwa horizontal wie der Balgboden verlaufen, um kontinuierlich in seitenwandzugeordneten Abschnitten zu enden, die vertikal wie die Seitenwände verlaufen.

Zur Zuordnung des Übergangsbogens zwischen Faltenbalgboden 5 und jeweiliger Seitenwand 3 bzw. 4 ist der Boden 5 bzw. der flexible Faltenbalgstoff 21 des Faltenbalgbodens 5 auf der Oberseite des Faltenbalgstoffs 21 mit einem Flauschband 27 als einem Teil eines Klettverschlusses versehen, wie der Unterseite des Abschnitts 20 am bodenseitigen Ende ein Klettband 28 als zweitem Teil des Klettverschlusses zugeordnet ist. Unter- und Oberseite vom Abschnitt 20 bzw. von flexiblem Faltenbalgstoff 21 ergeben sich, nachdem die Teile des jeweiligen Abschnitts 20 am unteren Rand der Klemmschienen 25 in eine horizontale Position geklappt sind, wie es in Fig. 7 dargestellt ist. In dieser Position der Abschnitte 20 werden diese auf die Materialbahn bzw. den flexiblen Faltenbalgstoff 21 aufgelegt, so daß die Teile des Klettbandverschlusses 27,28 aufeinander zu liegen kommen und die lösbare, feste und dichte Verbindung zwischen Übergangsbogen 14 und Faltenbalgboden 5 in dessen Ausbildung nach Fig. 6 hergestellt ist, wie es anhand von FIg. 7 nachvollziehbar ist, insbesondere wenn der obige Beschreibungsteil zuhilfe genommen wird.

Um nun die Verbindung zur jeweiligen Balgseitenwand 3 bzw. 4 herzustellen, werden die beiden zunächst noch aneinanderliegenden seitenwandseitigen, freien Endabschnitte der Materialbahnen 23 in die jeweilige Falte der jeweiligen Seitenwand eingeführt, um das Maß a, das der Faltentiefe entspricht, bis die seitenwandseitigen Stirnseiten der Klemmleisten abschnitte 25 bzw. der dritten Klemmleisten 26 26 an einer der ersten inneren Klemmleisten 12 der jeweiligen Seitenwand in Anlage kommen, die freien seitenwandseitigen Abschnitte des Verbindungsteils außerhalb des Bereichs der Klemmleisten abschnitte 25 bzw. der dritten Klemmleisten 26 26 bzw. im Bereich der Länge a aufgeklappt, bis sie an den Materialbahnen einer Seitenwandfalte anliegen und fest mit diesen Materialbahnen verbunden werden, beispielsweise durch Kleben, Nähen, Vulkanisieren. Im Gegensatz zu der Verbindung zwischen Verbindungsteil 23 und Boden, die in dem Klettverschluß 27,28 lösbar ist, kann bzw. sollte die Verbindung zwischen Übergangsteil und jeweiliger Seitenwand unlösbar sein.

In der beschriebenen Weise sind alle Materialbahnpaare des Übergangsteils ausgebildet und werden sie in der beschriebenen Weise mit Seitenwand und Boden verbunden und in wiederum entsprechender Weise werden zwei Verbindungsteile mit dem Boden im Bereich der beiden Bodenlängsränder und der jeweiligen der beiden Seitenwände verbunden. Die Verbindung der Verbindungsteile mit Boden und jeweiliger Seitenwand erfolgt nach dem Anschluß der Metallarmierungen 17 an die Konsolen 19 der Seitenwände in der beschriebenen Weise.

Bei Ausbildung des Faltenbalgbodens als Wellenbalg gemäß Fig. 4 erfolgt die Verbindung dieses Bodens mit der jeweiligen faltenbalgförmigen Seitenwand bzw. deren unterem Übergangsbogen gemäß Fig. 8, wobei die Seitenwände 3,4 wie in Fig. 7 dargestellt und beschirieben ausgebildet sind, in Fig. 8 aber nur das bodenseitige Ende des einen unteren Übergangsbogens 14 einer Seitenwand dargestellt ist. Der Übergang vom Faltenprofil der Seitenwand bzw. des Übergangsbogens 14 zum Wellenprofil des Bodens erfolgt dadurch, daß die erste innere Klemmleiste 12 der inneren Faltenkanten nicht an das Faltenende herangeführt, sondern um das Maß b vor dem Faltenende endet. In den Bereichen zwischen den Enden der ersten inneren Klemmleisten 12 und dem Faltenende, also im Bereich des Maßes b, legt sich nun jede Falte in die Kontur der Welle, sie kann in die Wellen zwischen je zwei zweiten äußeren Klemmleisten 16 des Bodens 5 eingeführt und dort mit einem Klettverschluß 27,28 dicht an das Bodenmaterial angelegt und mit diesem lösbar verbunden werden. Der festeren, aber ebenfalls lösbaren Verbindung dient eine erste Endausbildung 29 der jeweiligen Klemmleiste 16 der Bodenwellen, eine entsprechende zweite Endausbildung 11a der ersten äußeren Klemmleisten 11 und ein entsprechendes Verbindungsprofil 30 in Verbindung mit Schrauben, Nieten o.dgl., die durch übereinstimmende Löcher der beiden Endausbildungen 29,11a sowie des Verbindungsprofils 30 und des Faltenbalgstoffes von Seitenwand bzw. Übergangsbogen und Boden hindurchgeführt sind.

Bei dieser Lösung bilden die ersten äußeren Klemmleisten 11 im Dachbereich, in den Seitenwandbereich und in den Bereichen der Übergangsbogen einerseits und die zweiten äußeren Klemmleisten 16 andererseits nach Herstellung der lösbaren Verbindung mittels der Verbindungsprofile 30 übliche ringsumlaufende Zwischenrahmen des Faltenbalges. Durch die Ausbildung des Bodens 5 als Wellenbalg ist eine geringere Bodendicke und eine größere Annäherung an die Fahrbahn möglich, ohne daß der Verschleiß zu erwarten ist, der dann vorliegt, wenn bei gleicher Bodenfreiheit der Faltenbalg ringsum, also auch im Bodenbereich zickzackförmige Falten gemäß Fig. 3 hätte. Trotzdem ist aber einem Verschleiß des Wellenbalgbodens 5 gemäß Fig. 8 weiter noch dadurch Rechnung getragen, daß die zweiten äußeren Klemmleisten 16 die Bodenfreiheit definieren, diese aus abriebfestem Material hergestellt sind bzw. sein können und so das eigentliche Balgmaterial, also das beschichtete Gewebe vor Verschleiß bewahrt ist. Sind aber die zweiten äußeren Klemmleisten 16 tatsächlich verschlissen, so kann der Balgboden 5 in einfacher Weise ausgebaut werden, während Seitenwände, Dach und Übergangsbogen im Einbauzustand verbleiben, der ausgebaute Boden kann durch einen Ersatzboden ersetzt werden, der ausgebaute Boden ist aber seinerseits nicht als gesamte Baugruppe unbrauchbar geworden; seine Reparatur ist verhältnismäßig einfach dadurch möglich, daß die schadhaft gewordenen zweiten äußeren Klemmleisten 16 ausgetauscht werden und die Bodengruppe für die Wiederverwendung zur Verfügung steht. Die zweiten äußeren Klemmleisten 16 entsprechen funktionell den Stäben 170 bei der Lösung gemäß Fig. 7, sie sind "Kantprofile" im Sinne der Erfindung, die Lösung gemaß Fig. 8 stellt die optimale Realisierung des Grundgedankens der Erfindung dar.

Um weitere, einfache Möglichkeit, einen Balgboden einem aus Dach, Seitenwänden und Übergangsbogen bestehenden Balghauptkörper auswechselbar zuzuordnen, ist in Fig. 9 dargestellt. Zwischen den unteren Übergangsbogen ist ein Tuch 31 angeordnet, das glatt oder wie die Seitenwände gefaltet sein kann. Es ist in die Falten der unteren Übergangsbogen eingelegt, so daß eine Überlappung entsteht und dieser Zustand wird fixiert, indem durch korrespondierende Löcher in den Falten der Übergangsbogen und in den vorhandenen oder durch das Einlegen gebildeten Falten des Bodentuches 31 eine Schnur 32 gezogen wird, deren Enden in geeigneter Weise festgelegt werden.

## Patentansprüche

1. Faltenbalg (1) für den Einbau zwischen zwei gelenkig miteinander verbundenen Fahrzeugen (6,7), der im eingebauten Zustand eine in Umfangsrichtung geschlossene, eine Übergangsbrücke umgebende Röhre mit Dach (2), Seitenwänden (3,4) und Boden (6) bildet, **dadurch gekennzeichnet, daß** die Röhre zweiteilig ist, deren oberes Teil (2-4) in Umfangsrichtung als Einheit aus Dach (2) und Seitenwänden (3,4) besteht und deren unteres Teil aus einer den Boden (5) bildenden selbstständig an- und ausbaubaren Baugruppe besteht, die über lösbare Befestigungsmittel im Bereich der unteren Enden der Seitenwände (3,4) mit diesen verbunden ist, sodaß nach Zuordnung der den Boden bildenden Baugruppe die in Umfangsrichtung geschlossene Röhre gebildet ist, wobei die Verbindung so ausgebildet ist, daß auch in diesen Bereichen keine Umgebungseinflüsse in das Innere des Faltenbalgs (1).

2. Faltenbalg nach Anspruch 1, dessen Querschnitt im Einbauzustand die Form eines aufrechtstehenden Rechtecks mit abgerundeten Ecken hat, **dadurch gekennzeichnet**, daß die Seitenwände (3,4) des Balges (1) an den unteren Enden in Übergangsbögen (14) enden, mit deren den Seiten wänden (3,4) abgekehrten Enden der eine Baugruppe bildende Balgboden (5) lösbar verbunden ist.

3. Faltenbalg nach Anspruch 1 oder 2, **dadurch gekennzeichnet, daß** der Faltenbalg (1) im Bereich des Daches (2) und der Seitenwände (3,4) gleichen Abstand zwischen inneren und äußeren Balg- bzw. Faltenkanten (11,12) hat und daß die Dicke des Faltenbalgbodens (5) wesentlich geringer ist als der Abstand zwischen inneren und äußeren Balgkanten (11,12) im Bereich von Dach (2) und Seitenwänden (3,4).

4. Faltenbalg nach einem der Ansprüche 1 bis 3, **dadurch gekennzeichnet,** daß der Balgboden (5) die Form eines Wellenbalges (16,17) hat.

5. Faltenbalg nach Anspruch 4, **dadurch gekennzeichnet,** daß die von der Materialbahn (17) des Wellenbalges (16,17) gebildeten Wellen des Balgbodens (5) nach innen gewölbt sind.

6. Faltenbalg nach einem der Ansprüche 2 bis 5, **dadurch gekennzeichnet,** daß Falten des Faltenbalges vom freien Ende des einen unteren Übergangsbogens (14) über die anschließende Seitenwand (3 bzw. 4), das Dach (2) und die andere Seitenwand (4 bzw. 3) bis zum freien Ende des anderen unteren Übergangsbogens (14) durchgehend verlaufen und zwischen zwei aufeinanderfolgenden dieser Falten im Bereich der unteren Übergangsbogen (14) je eine Zwischenfalte angeordnet ist.

7. Faltenbalg nach Anspruch 3, **dadurch gekennzeichnet, daß** der Faltenbalgboden (5) eine Mehrzahl von Stäben (170) aufweist, wobei die Stäbe 170 parallel zueinander angeordnet sind und die Stäbe (170) in Längsrichtung des Faltenbalgs (1) aufeinander folgen.

8. Faltenbalg nach Anspruch 7, **dadurch gekennzeichnet,** daß die Stäbe (170) rotationssymmetrisch sind.

9. Faltenbalg nach Anspruch 7, **dadurch gekennzeichnet,** daß die Querschnitte der Stäbe (170) Ellipsen bilden, deren längere Achsen hochkant stehen.

10. Faltenbalg nach Anspruch 8 oder 9, **dadurch gekennzeichnet,** daß die Stäbe (170) Hohlprofile sind.

11. Faltenbalg nach einem der Ansprüche 7 bis 9, **dadurch gekennzeichnet,** daß ein Tuch (21) glatt gespannt zwischen den freien Enden der unteren Übergangsbogen (14) angeordnet ist und die Stäbe (170) durch dem Tuch zugeordnete Schlaufen (22) geführt sind.

12. Faltenbalg nach Anspruch 11 **dadurch gekennzeichnet,** daß das Tuch (21) gleichartig dem Material von Balgdach (2), Balgseitenwänden (3,4) und Übergangsbogen (13,14) ist und ein gummibeschichtetes Gewebe ist, das jedoch in sich elastich ist.

13. Faltenbalg nach den Ansprüchen 4 und 5, **dadurch gekennzeichnet,** daß Kantprofilstäbe (16) einzelne Bahnen des Balgbodens (5) zusammenhalten, die zwischen je zwei Kantprofilstäben (16) mit etwa halbkreisförmigem Querschnitt nach oben gewölbt sind.

14. Faltenbalg nach Anspruch 13 mit Kantprofilstäben (16), die vom freien Ende eines unteren Übergangsbogens (14) bis zum freien Ende des anderen unteren Übergangsbogens (14) verlaufen und Faltenbalgbahnen, Balgumkehrkanten bildend, zusammenhalten, **dadurch gekennzeichnet,** daß die Kantprofilstäbe (16) des Balgbodens (5) lösbar an zweite Endausbildungen (11a) der ersten äußeren Klemmleisten (11) von Dach (2) und Seitenwänden (3, 4) angeschlossen sind.

15. Faltenbalg nach Anspruch 14, **dadurch gekennzeichnet,** daß die Balgbahnen der Balgseitenwände (3,4) bzw. deren untere Übergangsbögen (14) im Bereich der unteren Übergangsbögen (14) über die zweiten Endausbildungen (11a) hinweggeführt sind und an der Unterseite der Materialbahnen (17) des Balgbodens (5) anliegen und mit diesen dicht, aber lösbar verbunden sind.

16. Faltenbalg nach Anspruch 15, **dadurch gekennzeichnet,** daß die dichte, aber lösbare Verbindung durch Klettbandverschlüsse erfolgt.

## Claims

1. A bellows (1) for installation between two pivotably connected vehicles (6, 7) and, in the installed state, forming a peripherally closed tube surrounding a gangway floorplate with a roof (2), side walls (3, 4) and floor (6), characterised in that the tube is in two parts, the upper part (2-4) in the peripheral direction consists of the roof (2) and side walls (3, 4) as a unit and the lower part consists of a sub-assembly which can be independently installed and dismantled and constitutes the floor (5) and is connected by releasable fastening means to the side walls (3, 4) in the region of the lower ends thereof so that after the sub-assembly forming the floor has been associated, the peripherally closed tube is formed, the connection being such that even in these regions no environmental influences can reach the interior of the bellows (1).

2. A bellows according to claim 1, the bellows cross-section in the installed state having the shape of an upright rectangle with rounded corners, characterised in that the side walls (3, 4) of the bellows end at the lower ends in transitional curves (14), and the ends thereof remote from the side walls (3, 4) are releasably connected to the bellows floor (5) forming a sub-assembly.

3. A bellows according to claim 1 or 2, characterised in that the bellows (1) in the region of the roof (2) and the side walls (3, 4) has the same distance between the inner and outer bellows edges or fold edges (11, 12) and the thickness of the bellows floor (5) is considerably less than the distance between the inner and outer bellows edges (11, 12) in the region of the roof (2) and side walls (3, 4).

4. A bellows according to any of claims 1 to 3, characterised in that the bellows floor (5) is in the form of a corrugated bellows (16, 17).

5. A bellows according to claim 4, characterised in that the corrugations in the bellows floor (5) formed by the web (17) of material of the bellows (16, 17) are inwardly curved.

6. A bellows according to any of claims 2 to 5, characterised in that folds of the bellows extend from the free end of one lower transitional curve (14) over the adjoining side wall (3, 4), the roof (2) and the other side wall (4, 3) continuously to the free end of the other lower transitional curve (14) and an intermediate fold is disposed between each pair of successive aforementioned folds in the region of the lower transitional curves (14).

7. A bellows according to claim 3, characterised in that the bellows floor (5) has a number of rods (170), the rods (170) being disposed parallel to one another and the rods (170) following one another in the longitudinal direction of the bellows (1).

8. A bellows according to claim 7, characterised in that the rods (170) are axially symmetrical.

9. A bellows according to claim 7, characterised in that the cross-sections of the rods (170) form ellipses with their major axes on edge.

10. A bellows according to claim 8 or 9, characterised in that the rods (170) are hollow profiles.

11. A bellows according to any of claims 7 to 9, characterised in that a cloth (21) is smoothly stretched between the free ends of the lower transitional curve (14) and the rods (170) are passed through loops (22) associated with the cloth.

12. A bellows according to claim 11, characterised in that the cloth (21) is uniform with the material of the bellows roof (2), the bellows side walls (3, 4) and the transitional curve (13, 14) and is a rubber-coated fabric but is intrinsically elastic.

13. A bellows according to claims 4 and 5, characterised in that edge profile rods (16) hold together individual webs of the bellows (5) which are curved upwards with an approximately semicircular cross-section between each pair of edge profile rods (16).

14. A bellows according to claim 13, comprising edge profile rods (16) which extend from the free end of a lower transitional curve (14) to the free end of the other lower transitional curve (14) and hold together webs of bellows forming turn-over edges, characterised in that the edge profile rods (16) of the bellows floor (5) are releasably connected to second end formations (11a) on the first outer clamping strips of the roof (2) and side walls (3, 4).

15. A bellows according to claim 14, characterised in that the bellows webs of the bellows side walls (3, 4) or their lower transitional curves (14) extend away over the second end formations (11a) in the region of the lower transitional curves (14) and abut the underside of the webs (17) of material of the bellows floor (5) and are tightly but releasably connected thereto.

16. A bellows according to claim 15, characterised in that the tight but releasable connection is made by a Velcro fastener.

## Revendications

1. Soufflet (1) destiné au montage entre deux véhicules (6, 7) reliés a articulation l'un à l'autre et formant, à l'état monté, un tube fermé dans la direction de la périphérie, entourant une passerelle et comportant un toit (2), des parois latérales (3, 4) et un plancher (6), caractérisé en ce que le tube est en deux partie dont la partie supérieure (2-4) est constitué, en formant une unité, d'un toit (2) et de parois latérales (3, 4) et dont la partie inférieure est constituée d'un composant montable et démontable de manière indépendante formant le plancher (5) et qui est relié aux parois latérales (3, 4) par l'intermédiaire de moyens de fixation amovibles dans la zone des extrémités inférieures de ces dernières de telle manière qu'après association du plancher formant le composant, on forme le tube fermé dans la direction de la périphérie, la liaison étant réalisée de telle manière que, dans cette zone aussi, les influences de l'environnement ne peuvent pas parvenir.

2. Soufflet selon la revendication 1, dont la section droite a, à l'état de montage, la forme d'un rectangle vertical à coins arrondis caractérisé en ce que les parois latérales (3, 4) du soufflet (1) se terminent, à leurs extrémités inférieures, par des arceaux de transition (14) au moyen desquels le plancher (5) formant une unité est relié de manière amovible aux extrémités éloignées des parois latérales (3, 4).

3. Soufflet selon la revendication 1 ou 2, caractérisé en ce que le soufflet (1) présente la même distance entre les arêtes de soufflet ou de pli interne et externe(11,12) dans la zone du toit (2) et des parois latérales (3, 4) et en ce que l'épaisseur du plancher (5) de soufflet est beaucoup plus faible que la distance entre les arêtes de soufflet interne et externe(11,12) dans la zone du toit (2) et des parois latérales (3, 4).

4. Soufflet selon l'une quelconque des revendications 1 à 3, caractérisé en ce que le plancher (5) a la forme d'un soufflet ondulé (16, 17).

5. Soufflet selon la revendication 4, caractérisé en ce que les ondulations du plancher (5) formées par les bandes de matériau (17) du soufflet ondulé (16, 17) sont courbées vers l'intérieur

6. Soufflet selon l'une quelconque des revendications 2 à 5, caractérisé en ce que des plis du soufflet s'étendent à partir de l'extrémité libre de l'un des arceaux de transition inférieurs (14) sur la paroi latérale voisine (3, respectivement 4), le toit (2) et la paroi latérale (4, respectivement 3) jusqu'à l'extrémité libre de l'autre arceau de transition inférieur (14) et en ce que, entre deux plis successifs de ces plis, dans la zone des arceaux de transition inférieurs (14), est disposé à chaque fois un pli intermédiaire.

7. Soufflet selon la revendication 3, caractérisé en ce que le plancher du soufflet (5) comporte une pluralité de barres (170), les barres (170) étant disposées parallèlement les unes par rapport aux autres et se succédant selon la direction longitudinale du soufflet (1).

8. Soufflet selon la revendication 7, caractérisé en ce que les barres (170) présentent une symétrie de rotation.

9. Soufflet selon la revendication 7, caractérisé en ce que les sections droites des barres (170) forment des ellipses dont les grands axes sont verticaux.

10. Soufflet selon la revendication 8 ou 9, caractérisé en ce que les barres (170) sont des profilés creux.

11. Soufflet selon l'une quelconque des revendications 7 à 9, caractérisé en ce qu'un tissu (21) est disposé en étant tendu de manière lisse entre les extrémités libres des arceaux de transition inférieurs (14) et en ce que les barres (170) sont guidées dans des boucles (22) associées au tissu.

12. Soufflet selon la revendication 11, caractérisé en ce que le tissu (21) est du même type que le matériau du toit du soufflet (2), des parois latérales du soufflet (3, 4) et des arceaux de transition (14, 14) et est un tissu revêtu de caoutchouc qui est cependant élastique en soi.

13. Soufflet selon les revendications 4 et 5, caractérisé en ce que des barres profilées d'arête (16) maintiennent assemblées des bandes individuelles du plancher du soufflet (5) qui sont courbées vers le haut avec une section droite sensiblement semi-circulaire à chaque fois entre deux barres profilées d'arête (16)

14. Soufflet selon la revendication 13, comportant des barres profilées d'arête (16) qui s'étendent à partir de l'extrémité libre d'un arceau de transition inférieur (14) jusqu'à l'extrémité libre de l'autre arceau de transition inférieur (14) et maintiennent assemblées des bandes de soufflet en formant des arêtes de retour de soufflet, caractérisé en ce que les barres profilées d'arête (16) du plancher du soufflet (5) sont raccordées de manière amovible à des deuxièmes conformations d'extrémité (11a) des premières barrettes d'extrémité externes du toit (2) et des parois latérales (3, 4).

15. Soufflet selon la revendication 14, caractérisé en ce que les bandes de soufflet des parois latérales du soufflet (3, 4) ou de leurs arceaux de transition inférieurs (14) sont, dans la zone des arceaux de transition inférieurs (14), guidées au dessus des deuxièmes conformations d'extrémité (11a) et reposent sur la face inférieure des bandes de matériau (17) du plancher du soufflet (5) et sont reliées de manière étanche mais amovible à ces dernières.

16. Soufflet selon la revendication 15, caractérisé en ce que la liaison étanche mais amovible se fait au moyen d'une fermeture à bandes agrippantes.
